Europäisches Patentamt

European Patent Office

Office européen des brevets

(11) Veröffentlichungsnummer : **0 337 939 B1**

(12) **EUROPÄISCHE PATENTSCHRIFT**

(45) Veröffentlichungstag der Patentschrift :
**13.05.92 Patentblatt 92/20**

(21) Anmeldenummer : **89810201.7**

(22) Anmeldetag : **15.03.89**

(51) Int. Cl.⁵ : $G01D\ 5/22$, $G01B\ 7/02$

(54) **Induktive Sensoranordnung und Messanordnung zur Ermittlung der Relativlage einer Sensoranordnung.**

(30) Priorität : **28.03.88 CH 1162/88**

(43) Veröffentlichungstag der Anmeldung :
**18.10.89 Patentblatt 89/42**

(45) Bekanntmachung des Hinweises auf die
Patenterteilung :
**13.05.92 Patentblatt 92/20**

(84) Benannte Vertragsstaaten :
**CH DE FR GB IT LI**

(56) Entgegenhaltungen :
**EP-A- 0 098 238**
**FR-A- 2 311 276**
**US-A- 2 564 221**

(73) Patentinhaber : **C.A. Weidmüller GmbH & Co.**
**Klingenbergstrasse 16**
**W-4930 Detmold (DE)**

(72) Erfinder : **Vornfett, Karl-Ulrich**
**Krippenhof 20**
**W-7570 Baden-Baden (DE)**

(74) Vertreter : **Hepp, Dieter et al**
**Hepp, Wenger & Partner AG Marktgasse 18**
**CH-9500 Wil (CH)**

**Beschreibung**

Die Erfindung betrifft eine induktive Sensoranordnung gemäss Oberbegriff von Patentanspruch 1 und deren Verwendung in einer Messanordnung gemäss Oberbegriff von Patentanspruch 7 oder 8. Eine derartige Sensoranordnung ist z.B. aus der EP-A-98 238 der Anmelderin bekannt.

Bei solchen induktiven Sensoranordnungen wird durch wenigstens eine von einem HF-Oszillator gespeiste Senderspule ein Wechselfeld in eine Mehrzahl von Empfängerspulen induziert. Durch Annäherung eines metallischen Objekts in einen Objekt-Erfassungsbereich, d.h. in das elektromagnetische Feld, wird dieses beeinflusst. Dadurch wird die induzierte Spannung in die Empfänger-Teilwicklungen ebenfalls beeinflusst, wobei sowohl Phasenverschiebungen in den einzelnen Teilwicklungen als auch Amplitudenschwankungen auftreten können. Dies resultiert in erster Linie daraus, dass durch das elektromagnetische Feld der Senderspule im metallischen Objekt Wirbelströme erzeugt werden, die auf das elektromagnetische Feld zurückwirken. Dieses durch die Senderspule erzeugte Wechselfeld induziert in den Teilwicklungen der Empfängerspulen-Anordnung also eine von der Lage des Objekts im Objekterfassungsbereich abhängige Wechselspannung. Bei der bekannten Anordnung ist die Empfängerspule in zwei oder mehr Teilwicklungen unterteilt, die sich bei einer Lageveränderung des Objekts unterschiedlich vom Objekt entfernen bzw. diesem nähern. Dadurch ergibt sich eine unterschiedliche Feldverteilung der HF-Felder und eine Phasenverschiebung in den beiden Teilwicklungen. Durch Vergleich der Teilspannungen der beiden Teilwicklungen lässt sich dabei auf einfachste Weise die Lageveränderung des Objekts ermitteln. Am einfachsten kann dies dadurch erfolgen, dass die Teilwicklungen unmittelbar ("direkt") mit entgegengesetztem Wicklungssinn zusammengeschaltet sind, so dass sich die Teilspannungen der Teilwicklungen aufheben, sofern sie in gleicher Weise durch das Objekt beeinflusst werden. Aendert sich dagegen die Relativlage des Objekts, dann tritt eine unterschiedliche Beeinflussung der beiden Teilwicklungen auf und die Teilspannungen kompensieren sich nur mehr teilweise, so dass die Empfängerspule ein verwertbares Ausgangssignal abgibt. Da durch Lageveränderung des Objekts auch eine Induktivitätsänderung der Teilwicklungen der Empfängerspule bewirkt wird, resultiert aus der Lageveränderung auch eine unterschiedliche Induktivitätsänderung der beiden Teilwicklungen, so dass eine Phasenänderung der Wechselspannung am Ausgang der Empfängerspule verglichen mit dem Signal der Senderspule ermittelt werden kann. Die bekannte Sensoranordnung eignet sich zum Abtasten von Objektunregelmässigkeiten, wie z.B. Spalten in Metallplatten oder Schweissnähte und dergleichen. Dabei hat es sich bewährt, dass die Teilwicklungen senkrecht zum Objekt zu beiden Seiten der Objektunregelmässigkeit angeordnet sind. Sobald eine der Empfänger-Teilwicklungen näher an der Objektunregelmässigkeit z.B. dem Spalt liegt, tritt eine unterschiedliche Beeinflussung in den beiden Empfänger-Teilwicklungen auf, was zu einem verwertbaren Ausgangssignal führt. Liegt der Spalt genau mittig zwischen den beiden Empfänger-Teilwicklungen werden gleiche Spannungen und Ströme induziert, so dass das System im Gleichgewicht ist und z.B. in einem Regelkreis zur Verfolgung einer Naht oder zum Auffinden eines Loches eingesetzt werden kann.

Schwierigkeiten können sich dabei dann ergeben, wenn z.B. bei Verfolgung eines Spalts, das Objekt auf einer Seite des Spalts näher an der darüberliegenden Empfänger-Teilwicklung liegt, als das Objekt auf der anderen Seite des Spalts bezogen auf die zugeordnete Teilwicklung liegt. Ersichtlicherweise wird nämlich dabei das elektromagnetische Feld nicht nur durch die Objektunregelmässigkeit, d.h. den Spalt beeinflusst, sondern auch assymmetrisch gedämpft durch unterschiedlichen Objekt-Abstand der beiden Teilwicklungen.

Um dies zu kompensieren, wurde bereits vorgeschlagen, zwei separate Abstandssensoren vorzusehen, mit welchen lediglich der Objektabstand gemessen wird. Aus unterschiedlichen Abstandsmesswerten lässt sich dann ein Kompensationssignal gewinnen, welches zur Korrektur des Seitenversatzsignals der beiden Empfänger-Teilwicklungen verwendet werden kann. Dabei hat es sich gezeigt, dass die von den Abstands-Sensoren gewonnenen Signale schon deshalb nicht exakt den Abstandsänderungen der Empfänger-Teilwicklungen entsprechen können, weil es sich dabei um separate Sensoren handelt, deren Lage und Beeinflussung durch das Objekt nicht genau identisch mit der Lage und der Beeinflussung in den beiden Empfänger-Teilwicklungen ist, von welchen die Seitenversatzsignale abgeleitet werden sollen. In bestimmten Anwendungsfällen verbleibt deshalb ein nicht kompensierbarer Restfehler.

Aufgabe der Erfindung ist es also, eine induktive Sensoranordnung bzw. eine Messanordnung zum Ermitteln der Relativlage einer solchen Sensoranordnung zu einem Objekt zu schaffen, bei welchem Abstandsfehler z.B. bei der Verfolgung von Nähten oder anderen Objektunregelmässigkeiten besser kompensierbar sind, so dass die Sensoranordnung exakter dem wirklichen Verlauf der Naht bzw. der Objektunregelmässigkeit folgen kann.

Eine solche Anordnung soll dabei mit einem Minimum an schaltungstechnischem Aufwand und in kompakter Sensor-Bauweise realisierbar sein. Erfindungsgemäss wird diese Aufgabe in erster Linie durch eine Anordnung gemäss Kennzeichen von Anspruch 1 gelöst. Der Einfachheit halber wird bei der nachfolgenden Schilderung davon ausgegangen, dass jede der beiden Spulenanordnungen lediglich zwei Empfänger-Teilspu-

2

len aufweist - eine typische Anordnung zur Verfolgung von Spalten oder Schweissnähten. Selbstverständlich ist die Anordnung je nach Anwendungsgebiet auch identisch mit drei, vier oder mehr Empfänger-Teilwicklungen je Spulenanordnung zu realisieren. Solche Anordnungen dienen dann typischerweise der Auffindung von Löchern oder anderen kreis- oder punktförmigen Objektunregelmässigkeiten.

Die Erfindung geht also zunächst davon aus, dass die Teilwicklungen der ersten Spulanordnungen in bekannter Weise direkt oder indirekt gegengekoppelt sind, so dass das von den beiden Teilwicklungen abgeleitete Differenzsignal dem Seitenversatz der Objektunregelmässigkeit entspricht. Ausserdem ist jeder der Teilwicklungen der ersten Spulenanordnung eine Teilwicklung der zweiten Spulenanordnung zugeordnet. Bezogen auf den Objekterfassungsbereich bzw. das Objekt fluchten die beiden Teilwicklungen etwa. Aufgrund des unterschiedlichen Abstands zum Objekt führt jede Abstandsänderung des Objekts unter den beiden fluchtenden Teilwicklungen dazu, dass eine unterschiedliche Veränderung der Induktion in die beiden Teilwicklungen auftritt. Der Vergleich dieser unterschiedlichen Induktionsänderungen in den beiden übereinanderliegenden Teilwicklungen lässt sich dazu nutzen, ein dem Abstand des Objekts unter den Teilwicklungen entsprechendes Signal zu gewinnen. Dieses Signal entspricht besonders exakt dem effektiven Abstand des Objekts zur Teilwicklung der ersten Spulenanordnung zur Messung des Seitenversatzes, weil diese Teilwicklung sowohl zur Gewinnung von Seitenversatzsignalen als auch - in Zusammenschaltung mit der darüberliegenden Teilwicklung der zweiten Spulenanordnung - zur Gewinnung von Abstandssignalen verwendet wird.

Besonders einfach lässt sich dabei die Sensoranordnung realisieren, wenn die Teilwicklungen der ersten Spulenanordnung untereinander direkt gegengeschaltet sind und gleichzeitig unmittelbar gegen die Teilwicklungen der zweiten Spulenanordnung geschaltet sind, um die abstandsproportionalen Signale zu gewinnen. Selbstverständlich lässt sich aber auch die Erfindung realisieren wenn zunächst von jeder der Einzel- Spulen z.B. über einen Verstärker und/oder Gleichrichter Signale abgeleitet und ermittelt werden, und sodann diese Signale indirekt miteinander verglichen bzw. gegeneinander geschaltet werden.

Insbesondere zur Verfolgung von Nähten oder Spalten in metallischen Objekten lässt sich gute Empfindlichkeit der Sensoranordnung erreichen, wenn die Wicklungsachsen der Senderspule und die Wicklungsachsen der Empfängerspulen zum Objekt-Erfassungsbereich bzw. zum Objekt hin gerichtet sind.

Besonders gute Differenzierung der Abstandssignale, die von den, bezogen auf den Objekterfassungsbereich, übereinanderliegenden Teilwicklungen gewonnen werden, lässt sich erreichen, wenn beide Empfänger-Spulenanordnungen bezogen auf den Objekterfassungsbereich, auf der gleichen Seite der Sender-Spule angeordnet sind.

Symmetrische, und zwar punktsymmetrische oder axialsymmetrische Anordnung der Teilwicklungen eignet sich vorteilhaft zur Auffindung oder Verfolgung linienförmiger oder punktförmiger Objektunregelmässigkeiten.

Bei flächigen Objekten sollen die Teilwicklungen jeder Spulenanordnung in einer Ebene, bezogen auf den Objekt-Erfassungsbereich angeordnet sein. Sofern das Objekt eine andere Form aufweist, und z.B. einen zylindrischen oder winkelförmig verlaufenden Objekt-Erfassungsbereich erfordert (z.B. Rohr-Nahtverfolgung) können die Teilwicklungen der Spulenanordnungen auch beliebig unter einem Winkel oder gekrümmt angeordnet werden, wie es z.B. in der EP-A-130 940 der Anmelderin beschrieben ist.

Je nach Anwendungsgebiet können die Teilwicklungen mit oder ohne Kern ausgebildet werden. Sie können auch, wie in der genannten EP-A-130 940 als flächige Leiterbahnen auf einem Träger Material angeordnet werden, um kompakte Bauweise zu erreichen. Wesentlich ist dabei die direkte induktive Kopplung von Senderspule oder Senderspulen und der Gesamtheit der Teilwicklungen der Empfänger-Spulenanordnungen, um genaue, den Seitenversatz und den Abstand der Teilwicklungen zum Objekt entsprechende Signale zu erhalten.

Die Erfindung ist im folgenden in Ausführungsbeispielen anhand der Zeichnungen näher erläutert. Es zeigen:

Figur 1 Eine bekannte Sensoranordnung

Figur 2 eine schematische Darstellung einer erfindungsgemässen Sensor- und Messanordnung mit direkt gegeneinander geschalteten Teilwicklungen

Figur 3 die schematische Darstellung einer erfindungsgemässen Sensor- und Messanordnung mit indirekt gegeneinander geschalteten bzw. ausgangsseitig an Vergleichsanordnungen geschaltete Teilwicklungen, und

Figur 4 die schematische Darstellung der Anordnung gemäss Figur 3 in Seitenansicht und in zusammengebautem Zustand.

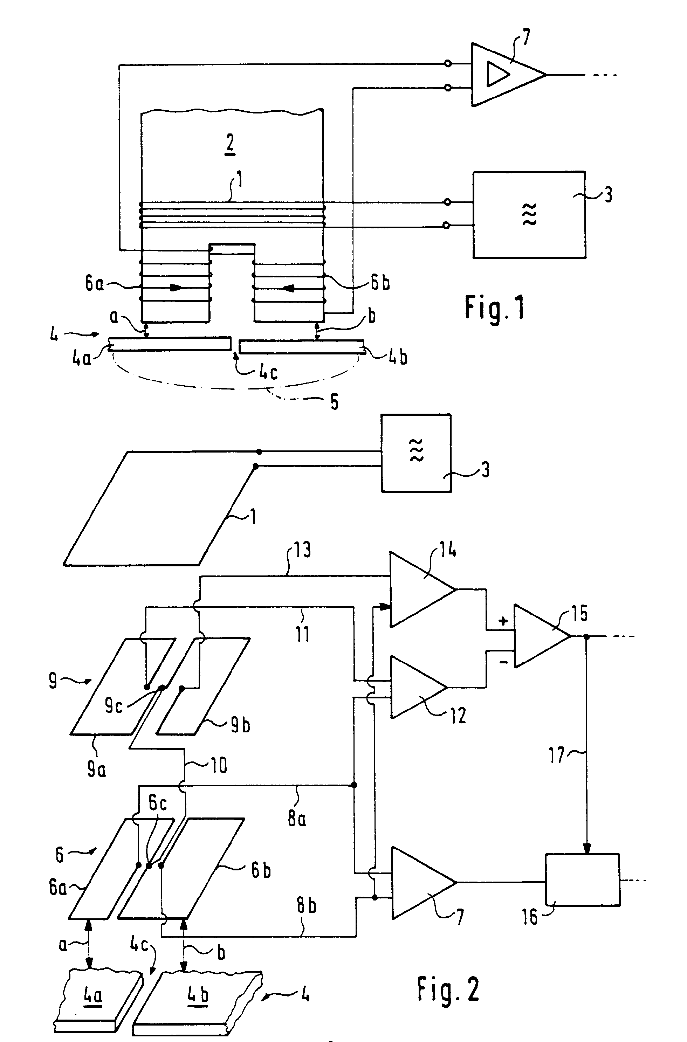

Figur 1 zeigt eine bekannte Anordnung, bei welcher eine Senderspule 1 auf einem Kern 2 angeordnet ist. Die Senderspule 1 wird durch eine HF-Oszillator 3 gespeist und erzeugt ein elektromagnetisches Feld, welches den Kern 2 und ein metallisches Objekt 4a, 4b erfasst, das im Einflussbereich des elektromagnetischen Felds bzw. des Objekt-Erfassungsbereichs 5 der Senderspule 1 liegt. Die Seite 4a des Objekts 4 liegt dabeinäher am Kern 2 als die Seite 4b des Objekts 4. Die Seiten 4a, 4b des Objekts 4 sind durch einen Schlitz 4c voneinander getrennt. Im elektromagnetischen Feld der Senderspule 1 liegen zwei Empfänger-Teilwicklungen 6a, 6b. Ohne Ein fluss des Objekts 4 wäre das elektromagnetische Feld der Senderspule absolut gleichmässig und würde dementsprechend in den identisch aufgebauten und symmetrisch angeordneten, aber gegeneinander geschalteten Empfänger-Teilwicklungen 6a, 6b nach Betrag und Spannung gleiche Induktion hervorrufen. Am Eingang eines Verstärkers 7 wurde in einem solchen Fall kein Signal anliegen. Durch das Objekt 4 und die in das Objekt induzierten Wirbelströme werden jedoch das Feld der Senderspule 1 und auch die Teilfelder in den Empfänger-Teilwicklungen 6a, 6b verändert. So bewirkt z.B. eine Annäherung des Schlitzes 4c an eine der Teilwicklungen, dass diese geringer gedämpft wird als die andere Teilwicklung. Da die beiden Teilwicklungen 6a, 6b gegeneinander geschaltet sind, überwiegt das Signal der weniger gedämpften Teilwicklung und es liegt ein unterscheidbares Signal am Eingang des Verstärkers 7 an. Dieses Signal kann in bekannter Weise dazu verwendet werden, z.B. eine Nachregeleinrichtung anzusteuern, welche mittels nicht dargestellten Auswertungs- und Antriebseinrichtungen eine Verlagerung des Kerns 2 und/oder des Objekts 4 solange vornimmt, bis vom Verstärker 7 kein Signal mehr abgegeben wird - was symmetrischen Bedingungen in den Teilwicklungen 6a, 6b und damit einer mittigen Ausrichtung des Kerns 2 über dem Schlitz 4centspricht.

In Figur 1 ist nun dargestellt, dass der Abstand a der Seite 4a des Objekts 4 zur Teilwicklung 6a kleiner ist, als der Abstand b der Seite 4b zur Teilwicklung 6b. Ersichtlicherweise tritt durch diese Entfernungsdifferenz eine stärkere Beeinflussung der Empfänger-Teilwicklung 6a auf, welche dem Signal überlagert wird, das aus einem Mittenversatz des Schlitzes 4c relativ zum Kern 2 gewonnen wird. Unterschiedliche Abstände a und b führen demnach zu einem Messfehler, der zu einer Fehlausrichtung des Kerns 2 relativ zum Schlitz 4c führt.

Figur 2 zeigt eine schematische Anordnung, bei welcher der Uebersichtlichkeit halber Spulen nur mit einer einzigen Wicklung angedeutet sind. Wie beim Ausführungsbeispiel gemäss Figur 1 ist wiederum eine Senderspule 1 vorgesehen, die an einen HF-Oszillator 3 geschaltet ist. Eine erste Spulenanordnung 6 besteht aus zwei identischen, aber gegensinnig gewickelten Empfänger-Teilwicklungen 6a, 6b. Die Teilwicklungen 6a, 6b sind über Leitungen 8a, 8b mit einer als Verstärker 7 angedeuteten Auswertungsschaltung verbunden. Analog der Funktionsweise des Ausführungsbeispiels gemäss Figur 1 liegt am Eingang des Verstärkers 7 kein Signal an, wenn die Teilwicklungen 6a, 6b der ersten Spulenanordnung 6 symmetrisch über dem Schlitz 4c des Objekts 4 liegen.

Ueber der ersten Spulenanordnung 6 ist eine zweite Spulenanordnung 9 vorgesehen, welche ebenfalls zwei Empfänger Teilwicklungen 9a, 9b aufweist. Der Mittelabgriff 6c bzw. 9c der ersten Spulenanordnung 6 und der zweiten Spulenanordnung 9 sind über eine Leitung 10 miteinander verbunden. Dies bewirkt, dass die Teilwicklung 6a und die Teilwicklung 9a gegeneinander geschaltet sind. An der Leitung 8a und einer Leitung 11 kann damit ein Signal abgegriffen werden, welches der Differenz der von der Senderspule 1 in die Teilwicklung 9a und die Teilwicklung 6a induzierten Signale entspricht. Dieses Differenz-Signal wird mittels der Leitung 8a und der Leitung 11 an den Eingang eines Verstärkers 12 gelegt.

In gleicher Weise sind die Wicklungen 6b und 9b der ersten Spulenanordnung 6 bzw. der zweiten Spulenanordnung 9 gegeneinander geschaltet, so dass an Leitungen 8b und 13 ein Signal anliegt, welches aus dem Unterschied der Induktion durch die Senderspule 1 in die Teilwicklung 6b bzw. 9b resultiert. Dieses Signal wird an den Eingang eines Verstärkers 14 angelegt. Da das Objekt 4 von der zweiten Spulenanordnung 9 weiter entfernt ist als von der ersten Spulenanordnung 6 führt eine Abstandsänderung des Objekts 4 zu einer schwächeren Beeinflussung der Teilwicklungen 9a, 9b als der Teilwicklungen 6a, 6b. Die Eingangssignale an den Verstärkern 12 und 14 entsprechen also dem Abstand des Objekts 4 zur ersten Spulenanordnung 6a. Durch entsprechende Ausbildung der Spulen und/oder Justierung der Verstärker 12 bzw. 14 lässt sich dabei ein Abgleich vornehmen, damit z.B. beim Erreichen eines Soll-Abstands vollständige Kompensation auftritt, d.h. am Eingang der Verstärker 12 und 14 kein Signal anliegt. Dies ist jedoch nicht Bedingung für die Funktionsweise der Erfindung.

Wenn nun im Betriebsablauf die Seite 4a des Objekts 4 näher an der Teilwicklung 6a liegt, als die Seite 6b des Objekts 4 an der Teilwicklung 6b, ergeben sich an den Eingängen der Verstärker 12 und 14 unterschiedliche Signalwerte. Dies resultiert daraus, dass die gegeneinander geschalteten Wicklungspaare 6a, 9a stärker vom Objekt 4 gedämpft werden, als die Wicklungspaare 6b, 9b. Die eine solche Abstandsdifferenz anzeigende Differenz der Ausgangssignale der Verstärker 12, 14 wird in einem Vergleicher 15 ausgewertet. Je nachdem, welche der Teilwicklungen 6a oder 6b näher am Objekt 4 liegt erscheint am Ausgang des Vergleichers (15) ein positives oder ein negatives Signal, das über eine Leitung 17 an eine Kompensationsschaltung 16 gelegt wird. Dadurch wird das Ausgangssignal des Verstärkers 7, welches dem Seitenversatz der beiden Teilwicklungen 6a, 6b zum Schlitz 4c entsprechen soll, so kompensiert, dass Unterschiede der Abstände a, b den Seitenversatz-Messwert nicht verfälschen.

Durch das Gegeneinanderschalten der Teilwicklungen 6a, 6b einerseits und der Teilwicklungen 6a, 9a bzw. 6b, 9b andererseits lassen sich also auf optimal einfache Weise Korrektursignale ableiten, die zur Erhöhung der Genauigkeit der Seitenversatzsignale führen. Da die Teilwicklungen 6a, 6b der ersten Spulenanordnung sowohl zur Gewinnung des Seitenversatzsignals mittels Verstärker 7 als auch zur Gewinnung der relativen Abstandssignale mittels Verstärker 12, 14 und Ver gleicher 15 eingesetzt werden, ist gewährleistet, dass die gewonnenen Abstandssignale tatsächlich dem jeweiligen Objektabstand der Teilwicklungen 6a, 6b entsprechen.

Die Verarbeitung und Auswertung der in den Teilwicklungen gewonnenen Signale ist dem Fachmann geläufig, so dass sich hier eine nähere Darstellung erübrigt. Dazu lassen sich z.B. Bandfilter, Phasendiskriminatoren oder auch Digitalschaltungen verwenden. Beim Ausführungsbeispiel sind diese Bauteile vereinfacht nur als Verstärker bzw. als Vergleichsschaltung oder als Kompensationsschaltung dargestellt.

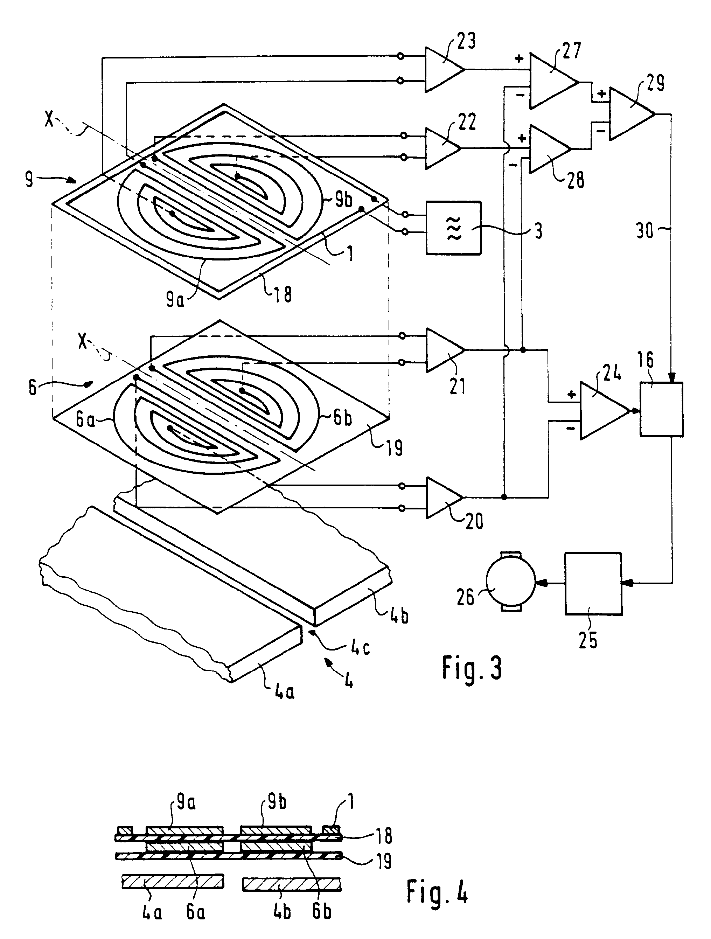

Figur 3 zeigt ein Ausführungsbeispiel, bei welchem gleiche Bauteile mit gleichen Bezugsziffern versehen sind. Dabei sind die Teilwicklungen 6a, 6b und 9a, 9b sowie die Senderspule 1 als flächige Schichten auf isolierenden Trägerscheiben 18, 19 angeordnet. Die Teilwicklungen 6a, 6b, 9a, 9b sind jeweils axialsymmetrisch zu einer Symmetrieachse X ausgebildet. Die Funktionsweise der Anordnung ist analog der Schaltungsanordnung gemäss Figur 2. Der einzige Unterschied besteht darin, dass die Teilwicklungen 6a, 6b bzw. 9a, 9b nicht direkt gegeneinander geschaltet sind sondern jeweils einzeln an Signalverstärker 20, 21, 22 und 23 angeschlossen sind. Im Betriebsablauf führt eine Verschiebung des Schlitzes 4c aus dem Bereich der Symmetrieachse X dazu, dass die Teilwicklungen 6a bzw. 6b ein unterschiedliches Ausgangssignal an die Verstärker 20, 21 abgeben. Das auf diese Weise gewonnene Seitenversatzsignal wird in der Vergleichsanordnung 24 ermittelt und über die Kompensationsschaltung 16 an einen schematisch dargestellten Regler 25 gelegt, der einen Nachführmotor solange ansteuert, bis das Objekt 4 durch eine nicht dargestellte mechanische Nachführeinrichtung wieder mit dem Schlitz 4c exakt unter der Symmetrieachse X liegt.

Zur Kompensation von Höhenunterschieden der Seite 4a des Objekts 4 ist die Auswertungsschaltung der Empfänger-Teil wicklung 6a auf folgende Weise mit der Teilwicklung 9a der zweiten Spulenanordnung zusammengeschaltet: Die Teilwicklung 9a ist ausgangsseitig mit dem Signalverstärker 23 verbunden, der seinerseits an den einen Eingang eines Vergleichers 27 gelegt ist. Der mit der Teilwicklung 6a verbundene Signalverstärker 20 ist ausgangsseitig mit dem zweiten Eingang des Vergleichers 27 verbunden. Am Ausgang des Vergleichers 27 liegt dementsprechend ein Signal, das der Differenz der in die Teilwicklungen 6a und 9a induzierten Spannungen entspricht. Diese Differenz ist ersichtlicherweise deshalb von der Entfernung der Seite 4a des Objekts 4 von der Teilwicklung 6a bzw. der Teilwicklung 9a abhängig, weil aufgrund des - wenn auch geringfügigen - Abstandsunterschieds der beiden Teilwicklungen zur Seite 4a diese die beiden Teilwicklungen unterschiedlich beeinflusst. Da die Beeinflussung etwa mit dem Quadrat der Entfernung abnimmt führt jede Entfernungsänderung zu einer Differenz am Ausgang der Signalverstärker 20, 23 welcher für die jeweiligen Entfernung charakteristisch ist.

Das gleiche gilt für die Teilwicklungen 6b und 9b bzw. den Ausgang an den Signalverstärkern 21 und 22, die mit einem Vergleicher 28 verbunden sind. Solange im Betriebsablauf der Abstand zwischen der Seite 4a und der Teilwicklung 6a bzw. der Abstand zwischen der Seite 4b und der Teilwicklung 6b identisch ist liegt deshalb an den Ausgängen der Vergleicher 27, 28 ein identisches Signal an. Diese beiden Signale werden jeweils an den Plus- bzw. Minuseingang eines Kompensationsvergleichers 29 gelegt, der bei identischen Signaleingängen kein Ausgangssignal abgibt. Aendert sich jedoch der Abstand zwischen einer der Teilwicklungen 6a oder 6b zum Objekt 4, dann liegen abweichende Signale am Eingang des Kompensationsvergleichers 29, so dass dieser ein Kompensationssignal über Leitung 30 an eine Kompensationsschaltung 16 abgibt. In der Kompensationsschaltung 16 wird daraufhin das von der Vergleichsanordnung 24 abgegebene Seitenversatzsignal entsprechend dem ermittelten Höhenversatz korrigiert und das derart korrigierte Signal dem Regler 25 zugeleitet.

Ersichtlicherweise garantiert die Doppelfunktion der Teilwicklungen 6a und 6b einerseits zur Ermittlung des Seitenversatzes und andererseits zur Ermittlung des Höhenversatzes in Verbindung mit den Teilwicklungen 9a und 9b auf optimal einfache Weise eine genaue Korrektur der Seitenversatzsignale. Aus Darstellungsgründen sind die Träger 18 und 19 in Figur 3 im Abstand zueinander gezeichnet. Figur 4 zeigt wie die Anordnung in der Praxis ausgelegt werden kann. Danach sind die beiden Träger 18 und 19 miteinander verbunden, wobei die Empfänger-Teilwicklungen 6a und 6b dazwischen aufgenommen werden. Die Teilwicklungen können dabei z.B. in der für gedruckte Schaltungen geläufigen Technik oder auch in Dickfilm-Technik aufgebracht sein. Gleiches gilt für die Senderspule 1, die gemäss Figur 4 zusammen mit den Empfänger-Teilwicklungen 9a und 9b auf der Oberseite des Trägers 18 vorgesehen ist.

## Patentansprüche

1. Induktive Sensoranordnung mit wenigstens einer von einem HF-Oszillator (3) mit Wechselstrom gespeisten Senderspule (1) zur Erzeugung eines räumlichen elektromagnetischen Felds, das induktiv mit der Senderspule (1) gekoppelte Empfängerspulen (6, 9) und einen durch das elektromagnetische Feld definierten Objekterfassungsbereich (5) umfasst, zum Ermitteln der Relativlage der Sensoranordnung zu einem metallischen Objekt (4) mit unregelmässiger, z.B. durch einen Spalt (4c) unterbrochener Oberfläche, wobei eine erste Empfänger-Spulenanordnung (6) mit wenigstens zwei Empfänger-Teilwicklungen (6a, 6b) im elektromagnetischen Feld der Senderspule (1) sowie im wesentlichen in gleicher räumlicher Lage und/oder im gleichen bestand zum Objekterfassungsbereich (5) angeordnet ist, wobei die induktive Kopplung und der Wicklungsaufbau von Senderspule (1) und Empfänger-Spulenanordnung (6) derart ausgelegt sind, dass ohne Objekteinfluss die Teilwicklungen (6a, 6b) der Spulenanordnung (6) von betragsmässig vorbestimmten, vorzugsweise gleichen Induktionsströmen der Senderspule (1) durchflossen werden, wobei die Empfänger-Teilwicklungen (6a, 6b) ausgangsseitig so gegeneinander geschaltet sind, dass die resultierende Signalspannung ohne Objekteinfluss einen durch die Gegeneinanderschaltung reduzierten Betrag, vorzugsweise Null beträgt, gekennzeichnet durch folgende Merkmale:

(a) eine zweite Empfänger-Spulenanordnung (9) mit gleicher Anzahl von Empfänger-Teilwicklungen (9a, 9b) wie die erste Spulenanordnung (6) ist, bezogen auf den Objekterfassungsbereich (5) in grösserem bestand und fluchtend über jeweils zugeordneten Empfänger-Teilwicklungen (6a, 6b) der ersten Spulenanordnung angeordnet und

(b) die jeweils einander zugeordneten, bezogen auf den Objekterfassungsbereich fluchtenden Empfänger-Teilwicklungen (6a, 9a bzw. 6b, 9b) der ersten und der zweiten Spulenanordnung (6 bzw. 9) sind ausgangsseitig jeweils so gegeneinander geschaltet, dass die resultierende Signalspannung bei Vorhandensein eines metallischen Objekts im vorbestimmbaren bestand im Objekterfassungsbereich einen reduzierten Betrag, vorzugsweise Null beträgt.

2. Sensoranordnung nach Anspruch 1, dadurch gekennzeichnet, dass die Wicklungsachsen der Senderspule (1) und der Empfänger-Teilwicklungen (6a, 6b und 9a, 9b) zum Objekterfassungsbereich (5) hin gerichtet sind.

3. Sensoranordnung nach Anspruch 1 oder 2, dadurch gekennzeichnet, dass beide Empfänger-Spulenanordnungen (6, 9) bezogen auf den Objekterfassungsbereich (5) auf der gleichen Seite der Senderspule (1) angeordnet sind.

4. Sensoranordnung nach Anspruch 3, dadurch gekennzeichnet, dass beide Empfänger-Spulenanordnungen (6, 9) auf der dem Objekterfassungsbereich (5) zugewandten Seite der Senderspule (1) angeordnet sind.

5. Sensoranordnung nach einem der vorangegangenen Ansprüche, dadurch gekennzeichnet, dass die Empfänger-Teilwicklungen (6a, 6b bzw. 9a, 9b) jeder Empfänger-Spulenanordnung (6 bzw. 9) symmetrisch ausgebildet sind.

6. Sensoranordnung nach einem der vorangegangenen Ansprüche, dadurch gekennzeichnet, dass die Empfänger-Teilwicklungen (6a, 6b bzw. 9a, 9b) jeder Empfänger-Spulenanordnung (6 bzw. 9) in einer Ebene bezogen auf den Objekterfassungsbereich (5) angeordnet sind.

7. Verwendung einer Sensoranordnung nach einem der vorangegangenen Ansprüche in einer Messanordnung zum Ermitteln der Relativlage der Sensoranordnung zu einem metallischen Objekt (4) das sich im Objekterfassungsbereich (5) der Sensoranordnung befindet, wobei die Empfänger-Teilwicklungen (6a, 6b) ansgangsseitig mit einer Auswertungsanordnung (7) verbunden sind, dadurch gekennzeichnet, dass die bezogen auf den Objekterfassungsbereich fluchtenden Empfänger-Teilwicklungen (6a, 9a bzw. 6b, 9b) der ersten und der zweiten Empfänger-Spulenanordnung (6, 9) jeweils paarweise an je eine Auswertungsschaltung (12, 14) derart angeschlossen sind dass Aenderungen des elektromagnetischen Felds der Senderspule (1) in Ahängigkeit von einer Astandsänderung des metallischen Objekts (4) von jedem fluchtenden Paar der Empfänger-Teilwicklungen (6a, 9a bzw. 6b, 9b) ermittelbar sind.

8. Verwendung einer Sensoranordnung nach einem der Ansprüche 1 bis 6 in einer Messanordnung zum Ermitteln der Relativlage der Sensoranordnung zu einem metallischen Objekt (4) das sich im Objekterfassungsbereich (5) der Sensoranordnung befindet, dadurch gekennzeichnet, dass die Empfänger-Teilwicklungen (6a, 6b) der ersten Empfänger-Spulenanordnung (6) mit einer Auswertungsschaltung (20, 21, 24) verbunden sind und dass das Ausgangssignal des einen Paars der einander zugeordneten Empfänger-Teilwicklungen (6a, 9a) mit dem Ausgangssignal des anderen Paars der einander zugeordneten Empfänger-Teilwicklungen (6b, 9b) an je einen Vergleicher (27 bzw. 28) gelegt ist, deren Ausgangssignal wiederum an einen Kompensationsvergleicher (29) gelegt ist, der ausgangsseitig mit einer Kompensationsschaltung (16) für die Ausgangssignale der ersten Vergleichsanordnung (24) für die beiden Empfänger-Teilwicklungen (6a, 6b) verbunden ist.

EP 0 337 939 B1

## Claims

1. Inductive sensor arrangement with at least one transmitter coil (1) supplied with alternating current from an HF-oscillator (3) for the generation of a spatial magnetic field which incorporates receiver coils (6, 9) which are coupled inductively with the transmitter coil (1) and an object detection region (5) defined by the electromagnetic field for ascertaining the relative position of the sensing arrangement to a metallic object (4) with an irregular surface, for example interrupted by a gap (4c), whereby the first receiver coil arrangement (6) is arranged with at least two receiver winding portions (6a, 6b) within the electromagnetic field of the transmitter coil (1) as well as in principle in the same spatial position and/or at the same distance from the object detection region (5), whereby the inductive coupling and the winding construction of the transmitter coil (1) and receiver coil arrangement (6) are designed in such a way that, without influence of the object, the induction currents of the transmitter coil (1), of a predetermined level, preferably the same, pass through the winding portions (6a, 6b) of the coil arrangement (6), whereby the receiver winding portions (6a, 6b) are connected in opposite relationship at their output sides in such a way that the resulting signal voltage, without influence of the object, amounts to a reduced level, preferably zero, through the connection in opposite relationship, characterized by the following features:

a) A second receiver coil arrangement (9), with the same number of receiver winding portions (9a, 9b) as the first coil arrangement (6), is arranged, in relation to the object detection region (5), at a larger distance and in alignment above respectively allocated receiver winding portions (6a, 6b) of the first coil arrangement, and

b) The winding portions (6a, 9a respectively 6b, 9b), aligned in relation to the object detection region, which are in each case allocated to one another, of the first and the second coil arrangement (6, 9) are, on their output sides, respectively connected in opposite relationship in such a way that the resulting signal voltage in the presence of a metal object at a predetermined distance within the object detection region (5) amounts to a reduced level, preferably zero.

2. Sensor arrangement according to claim 1, characterized in that the axis of the windings of the sensor coil (1) and the receiver winding portions (6a, 6b, and 9a, 9b) is directed towards the object detection region (5).

3. Sensor arrangement according to claims 1 or 2, characterized in that both the receiver coil arrangements (6, 9) are, in relation to the object detection region (5), arranged on the same side of the transmitter coil (1).

4. Sensor arrangement according to claim 3, characterized in that both the receiver coil arrangements (6, 9) are arranged on the side of the transmitter coil (1) which is orientated towards the object detection region (5).

5. Sensor arrangement according to one of the preceding claims, characterized in that the receiver winding portions (6a, 6b, respectively 9a, 9b) of each receiver coil arrangement (6, respectively 9) are formed symmetrically.

6. Sensor arrangement according to one of the preceding claims, characterized in that the receiver winding portions (6a, 6b, respectively 9a, 9b) of each receiver coil arrangement (6, respectively 9) are arranged in a plane in relation to the object detection region (5).

7. Use of a sensor arrangement according to one of the preceding claims, in a measuring arrangement for ascertaining the relative position of the sensor arrangement to a metallic object (4) which is situated within the object detection region (5) of the sensor arrangement, whereby the receiver winding portions (6a, 6b), on their output sides, are connected to an evaluation arrangement (7), characterized in that the receiver winding portions (6a, 9a, respectively 6b, 9b), which are in alignment in relation to the object detection region, of the first and the second coil arrangements (6, 9) are in each case each connected in pairs to an evaluation circuit (12, 14) in such a way that changes to the electromagnetic field of the transmitter coil (1), dependent on a change of distance of the metallic object (4) from each aligned pair of receiver winding portions (6a, 9a respectively 6b, 9b), are able to be ascertained.

8. Use of a sensor arrangement according to one of the claims 1 to 6 in a measuring arrangement for ascertaining the relative position of the sensor arrangement to a metallic object (4) which is located within the object detection region (5) of the sensor arrangement, characterized in that the receiver winding portions (6a, 6b) of the first receiver coil arrangement (6) are connected to an evaluation circuit (20, 21, 24) and that the output signal of one of the pairs of receiver winding portions (6a, 9a) which are allocated to one another is fed, with the output signal of the other pair of receiver winding portions (6b, 9b) which are allocated to one another, each to a comparator (27, respectively 28) whose output signal is further fed to a compensation comparator (29) which, on the output side, is connected with a compensation circuit (16) for the output signal of the first comparator arrangement (24) for both the receiver winding portions (6a, 6b).

7

**Revendications**

1. Dispositif formant capteur inductif comportant une ou plusieurs bobines d'émission alimentées en courant alternatif par un oscillateur HF (3) pour produire un champ électromagnétique spatial couvrant des bobines de réception (6, 9) couplées de façon inductive avec la bobine d'émission (1), et une zone de détection d'objet (5) définie par le champ électromagnétique, destiné à calculer la position relative du dispositif formant capteur par rapport à un objet métallique (4) présentant une surface irrégulière, par exemple interrompue par une fente (4c), étant précisé qu'un premier dispositif de bobine de réception (6) comportant au moins deux enroulements partiels de réception (6a, 6b) est disposé dans le champ électromagnétique de la bobine d'émission (1) et sensiblement au même endroit dans l'espace que la zone de détection d'objet (5) et/ou à la même distance de celle-ci, que le couplage inductif et la structure de l'enroulement de la bobine d'émission (1) et du dispositif de bobine de réception (6) sont étudiés pour que, sans l'influence de l'objet, les enroulements partiels (6a, 6b) du dispositif de bobine (6) soient traversés par des courant d'induction de la bobine d'émission (1), de préférence identiques et dont les valeurs sont prédéfinies, et que les enroulements partiels de réception (6a, 6b) sont montés en opposition, côté sortie, de sorte que la tension de signal qui en résulte a, sans l'influence d'un objet, une valeur réduite par le montage en opposition, de préférence zéro, caractérisé par ce qui suit:

(a) un second dispositif de bobine de réception (9) possédant le même nombre d'enrouement partiels de réception (9a, 9b) que le premier dispositif de bobine (6) est disposé à une plus grande distance de la zone de détection d'objet (5) et dans l'alignement de celle-ci, au dessus d'enroulement partiels de réception (6a, 6b), respectivement associés, du premier dispositif de bobine, et

(b) les enroulements partiels de réception (6a, 9a, respectivement 6b, 9b) des premier et second dispositifs de bobine (respectivement 6 et 9), associés respectivement les uns aux autres et alignés par rapport à la zone de détection d'objet, sont montés en opposition, côté sortie, de sorte que la tension de signal qui en résulte a, en présence d'un objet métallique à une distance pouvant être prédéfinie dans la zone de détection d'objet, une valeur réduite, de préférence zéro.

2. Dispositif formant capteur selon la revendication 1, caractérisé en ce que les axes d'enroulement de la bobine d'émission (1) et des enroulements partiels de réception (6a, 6b et 9a, 9b) sont orientés vers la zone de détection d'objet (5).

3. Dispositif formant capteur selon la revendication 1 ou 2, caractérisé en ce que les deux dispositifs de bobines de réception (6, 9) sont disposés du même côté de la bobine d'émission (1) par rapport à la zone de détection d'objet (5).

4. Dispositif formant capteur selon la revendication 3, caractérisé en ce que les deux dispositifs de bobines de réception (6, 9 sont disposés sur le côté de la bobine d'émission (1) tourné vers la zone de détection d'objet (5).

5. Dispositif formant capteur selon l'une des revendications précédentes, caractérisé en ce que les enroulements partiels de réception (6a, 6b, respectivement 9a, 9b) de chaque dispositif de bobine de réception (6, respectivement 9) sont conçus de façon symétrique.

6. Dispositif formant capteur selon l'une des revendications précédentes, caractérisé en ce que les enroulements partiels de réception (6a, 6b respectivement 9a, 9b) de chaque dispositif de bobine de réception (6, respectivement 9) sont disposés dans une seul plan par rapport à la zone de détection d'objet (5).

7. Utilisation d'un dispositif formant capteur selon l'une des revendications précédentes dans un dispositif de mesure destiné à calculer la position relative du dispositif formant capteur par rapport à un objet métallique (4) se trouvant dans la zone de détection d'objet (5) dudit dispositif formant capteur, étant précisé que les enroulements partiels de réception (6a, 6b) sont reliés, côté sortie, à un dispositif d'évaluation (7), caractérisée en ce que les enroulements partiels de réception (6a, 9a respectivement 6b, 9b) des premier et second dispositifs de bobines de réception (6, 9), alignés par rapport à la zone de détection d'objet, sont reliés par paires à un montage d'évaluation respectif (12, 14) de telle sorte que des modifications du champ électromagnétique de la bobine d'émission (1) puissent être calculées en fonction d'un modification de la distance entre l'objet métallique (4) et chaque paire alignée des enroulements partiels de réception (6a, 9a, respectivement 6b, 9b).

8. Utilisation d'une dispositif formant capteur selon l'une des revendication 1 à 6 dans un dispositif de mesure destiné à calculer la position relative du dispositif formant capteur par rapport à un objet métallique (4) se trouvant dans la zone de détection d'objet (5) du dispositif formant capteur, caractérisée en ce que les enroulements partiels de réception (6a, 6b) du premier dispositif de bobine de réception (6) sont reliés à un montage d'évaluation (20, 21, 24) et en ce que le signal de sortie d'une première paire d'enroulements partiels de réception associés entre eux (6a, 9a) est présenté, avec le signal de sortie de la seconde paire d'enroulements partiels de réception associés entre eux (6b, 9b), à un comparateur (27, respectivement 28) dont le signal de sortie est présenté à son tour à un comparateur de compensation (29) qui est relié, côté sortie, à un montage de compensation (16) pour les signaux de sortie du premier dispositif comparateur (24) prévu pour les deux enroulements partiels de réception (6a, 6b).

Fig.1

Fig.2

Fig. 3

Fig. 4